# EUROPEAN PATENT SPECIFICATION

(11) **EP 2 320 616 B1**
(45) Date of publication and mention of the grant of the patent: **27.11.2013**
(21) Application number: 09811027.3
(22) Date of filing: 25.08.2009
(51) Int. Cl.: H04L 29/08, G06F 17/30

(54) **MOBILE SEARCHING METHOD AND SYSTEM, AND METHOD FOR SYNCHRONIZING SEARCH ABILITY OF SEARCHING SERVER**
MOBILES SUCHVERFAHREN UND -SYSTEM SOWIE VERFAHREN ZUM SYNCHRONISIEREN DER SUCHFÄHIGKEITEN EINES SUCHSERVERS
PROCÉDÉ DE RECHERCHE MOBILE ET SYSTÈME ASSOCIÉ, ET PROCÉDÉ DE SYNCHRONISATION DE LA CAPACITÉ DE RECHERCHE D'UN SERVEUR DE RECHERCHE

(30) Priority: 03.09.2008 CN 200810147590
(43) Date of publication of application: 11.05.2011
(73) Proprietor: Huawei Technologies Co., Ltd., Longgang District, Shenzhen Guangdong 518129 (CN)
(72) Inventor: WANG, Wei, Longgang District Shenzhen 518129 (CN); MIN, Guobing, Longgang District Shenzhen 518129 (CN); DONG, Xiaoyi, Longgang District Shenzhen 518129 (CN); HU, Hanqiang, Longgang District Shenzhen 518129 (CN); GU, Chong, Longgang District Shenzhen 518129 (CN); LI, Zhengbing, Longgang District Shenzhen 518129 (CN)
(74) Representative: Kreuz, Georg Maria
(86) International application number: PCT/CN2009/073494
(87) International publication number: WO 2010/025652

(56) References cited:
- WO-A2-2006/017483
- CN-A- 1 353 836
- CN-A- 1 731 400
- CN-A- 101 052 181
- CN-A- 101 178 712
- JP-A- 2007 323 394
- US-A1- 2008 071 742

## Description

The present invention relates to the field of mobile communication technology, and more particularly to a mobile search method and system, and a search server.

### BACKGROUND OF THE INVENTION

Mobile search is a product of converging the mobile communication technology and the search engine technology. As a combination of two hot fields, the mobile search service is in a rapid growing period. Currently, the mobile search service has become a new highlight and a point of growth of the mobile value-added service.

Existing mobile search is categorized into centralized mobile search and decentralized mobile search.

A centralized mobile search engine is a retrieval system based on a single Web page database center, and needs to store enormous related object information on the Internet and in offline databases of different places, which poses a challenge on storage and computation scale of a Web page database. Meanwhile, this centralized retrieval mode with a single center requires super computation process capability and vast storage capability of huge server clusters to satisfy people's retrieval demand for daily network information. Therefore, the centralized mobile search engine confronts problems such as difficulty of data information collection and maintenance, and bottleneck of server computation processing.

A decentralized mobile search engine maintains its own Web page database, data storage is decentralized, and capability of each search engine is limited to only its own Web page database. Therefore, member search engines managed by each search server are scattered, and cannot be uniformly controlled.

However, the following problems exist in the prior art. In the prior art, for the centralized mobile search, the data information collection and maintenance are difficult, and the bottleneck of server computation processing exists, while for the decentralized mobile search, the member search engines managed by each search server are scattered and cannot be uniformly controlled.

The document JP2007323394A discloses a metasearch system that performs a metasearch causing a plurality of search engines to simultaneously search for a Web page. The metasearch system selects a particular search engine from among a plurality of search engines on the basis of a target word contained in a representation input by a user and associated with the particular search engine among the plurality of search engines, and causes the selected particular search engine to search for a Web page including a keyword contained in the representation input by the user.

The document WO 2006017483 A2 discloses a system and a method for improving the relevance of search results given by, and favorable user experience with, a search engine by automatically detecting and removing search listings which are unusually infrequently selected by users from among other search listings.

The document US 2008071742 A1 discloses a system and method for aggregating search results. The search results from each of the databases searched may be combined to produce an aggregated, ranked list of search results. The ranked list of the search results is provided to the user.

### SUMMARY OF THE INVENTION

Accordingly, the present invention provides a mobile search method and system, which can enable member search engines managed by each search server to be uniformly controlled, and can also reduce computation burden of a search server.

According to the first aspect of the present invention a mobile search method includes the following steps: A local search server receives a first search request sent by a client. The first search request carries a search keyword. A member search engine is acquired by selecting from a meta index stored locally, according to the search keyword. The meta index stored locally includes a meta index of the local search server and meta indexes of other search servers. The meta index comprises three types of content: a keyword, an engine and a weight value. The weight value denotes an association relationship between a keyword and a member search engine. A search server at which the member search engine is located is searched. If the search server at which the member search engine is located is not a local search server, a second search request is sent to the search server at which the member search engine is located. The second search request includes the search keyword. A search result returned by the search server at which the member search engine is located according to the second search request is received. The search result is sent to the client.

According to the second aspect of the present invention a method for synchronizing search capability of a search server includes the following steps: A local search server sends a meta index synchronization request to other search servers. The other search servers update a stored meta index of the local search server according to the meta index synchronization request.

According to the third aspect of the present invention a mobile search system includes multiple search servers. Each search server manages at least one member search engine. The search server is configured to: receive a first search request; acquire a member search engine by selecting from a meta index including a meta index of a local search server and meta indexes of other search servers, according to a search keyword in the first search request; determine whether a search server at which the member search engine is located is a local search server; if not, send a second search request to the search server at which the member search engine acquired by selecting is located; receive a search result that is returned by the search server at which the member search engine is located according to the second search request; and return the search result to a client. According to the fourth aspect of the present invention a search server includes an input-output unit, a meta index database, a member search engine selecting unit, and a search collaboration unit. The input-output unit is configured to receive a first search request of a client, send the first search request to the member search engine selecting unit, and return a search result to the client. The meta index database is configured to store a meta index of a local search server and meta indexes of other search servers. The meta index comprises three types of content: a keyword, an engine and a weight value. The weight value denotes an association relationship between a keyword and a member search engine. The member search engine selecting unit is configured to acquire a member search engine by selecting from a meta index stored in the meta index database according to the search request, and determine whether a server at which the member search engine is located is a local search server. If not, the search collaboration unit is controlled to send a second search request to the search server at which the member search engine acquired by selecting is located. The search collaboration unit is configured to send the second search request to the search server at which the member search engine is located, and receive a search result returned by the search server at which the member search engine is located.

The mobile search method and system, and the method for synchronizing search capability of a search server according to the present invention can select member search engines managed by each search server to search, so that the member search engines managed by each search server can be uniformly controlled, computation burden of a search server can also be reduced, and accuracy of mobile search is increased.

### BRIEF DESCRIPTION OF THE DRAWINGS

FIG. 1 is a schematic diagram of a mobile search method according to an embodiment of the present invention;
FIG. 2 is a schematic diagram of the architecture of a metasearch engine according to an embodiment of the present invention;
FIG. 3 is a flow chart of registration of a member search engine according to an embodiment of the present invention;
FIG. 4 is a structural view of a topology of a central directory server according to an embodiment of the present invention;
FIG. 5 is a structural view of a topology of semi-decentralized structured P2P computing according to an embodiment of the present invention;
FIG. 6 is a flow chart of signaling of a mobile search method according to an embodiment of the present invention;
FIG. 7 is a schematic diagram of a mobile search system according to an embodiment of the present invention; and
FIG. 8 is a schematic diagram of a search server according to an embodiment of the present invention.

### DETAILED DESCRIPTION OF THE EMBODIMENTS

To make the objectives, technical solutions, and merits of the present invention ore comprehensive, the present invention is described in detail with reference to the embodiments and accompanying drawings. It is understandable that the embodiments herein are for the exemplary purpose only, and are not intended to limit the present invention.

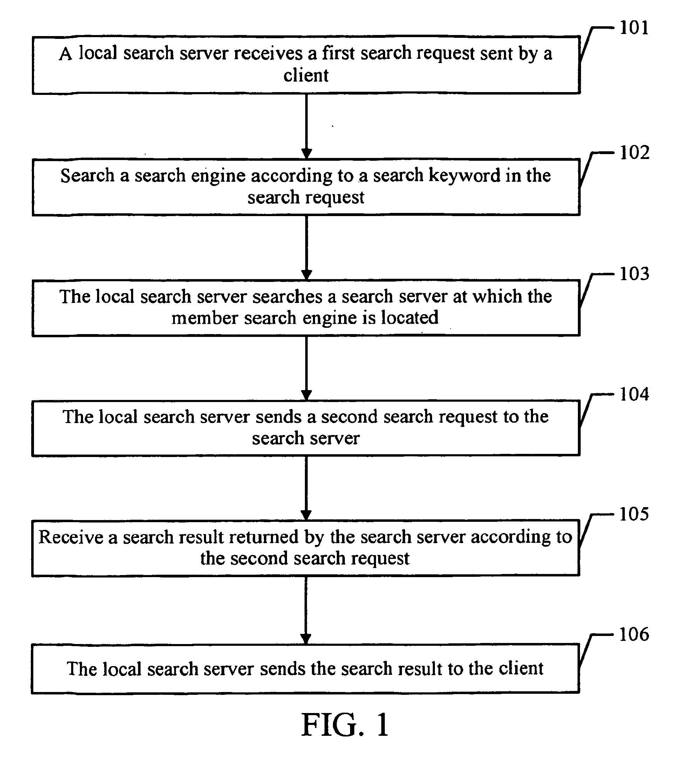

FIG. 1 is a mobile search method according to an embodiment of the present invention. Referring to FIG. 1, the method includes the following steps:
Step 101: A local search server receives a first search request sent by a client, in which the first search request carries a search keyword.

When a user needs to search, the user sends a first search request to a local search server through the client. The first search request carries a search keyword that the user intends to search.

Step 102: The local search server acquires a member search engine by selecting from a meta index stored locally according to the search keyword.

In this embodiment, the local search server not only stores its own meta index locally, but also stores meta indexes of other search servers. The other search servers described here mean search servers capable of communication connection or data exchange with the local search server.

For ease of understanding, a meta index and a metasearch engine using the meta index are briefly introduced.

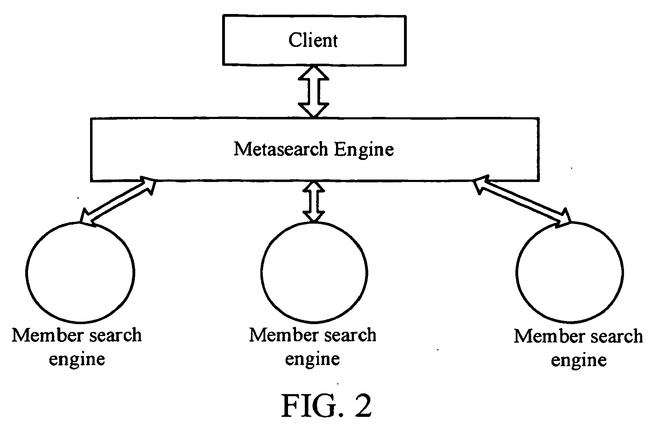

FIG. 2 is a schematic diagram of the architecture of a metasearch engine according to an embodiment of the present invention.

As shown in FIG. 2, the metasearch engine (also referred to a search server) is an engine which invokes other independent search engines. The metasearch engine integrates, invokes, controls, and optimally utilizes multiple independent search engines. Relatively to the metasearch engine, an independent search engine which can be utilized is referred to as a "source search engine", or a "member search engine".

A meta index is an index of the metasearch engine for the member search engine, and the metasearch engine selects and controls the member search engine by maintaining meta index information of the member search engine locally. When the member search engine registers with the metasearch engine, the member search engine provides information of interface parameters and capability parameters in terms of a format specified by the metasearch engine, and the metasearch engine generates a meta index of the member search engine. The metasearch engine collectively controls registered search engines by using a meta index of each member search engine.

When the client initiates a first search request, the metasearch engine (search server) can invoke a corresponding member search engine for search according to a keyword in the first search request.

Step 103: The local search server searches a search server at which the member search engine is located.

After acquiring the member search engine by selecting from the meta index stored locally in step 102 in this embodiment, the search server at which the member search engine is located can be searched.

Step 104: The local search server sends a second search request to the search server at which the member search engine is located.

If the search server at which the member search engine is located searched by the local search server is not a local search server, the local search server sends the second search request including the search keyword to the search server at which the member search engine is located for the member search engine to search according to the search keyword.

It should be noted that in this embodiment after searching the search server at which the member search engine is located, the local search server can determine whether the search server at which the member search engine is located is a local search server, specifically, determining whether identifiers of servers are the same, or determining whether unique addresses of the servers are the same. If determining that the search server at which the member search engine is located is not a local search server, the local search server can send the second search request to the search server at which the member search engine is located.

It can be understood that, the determination step is adopted in the foregoing to realize sending of the second search request. In practical applications, the local search server can also choose not to perform determination. That is, after searching the search server at which the member search engine is located, the local search server directly sends the second search request to the search server at which the member search engine is located. For example, when the local search server does not manage any member search engine, the search server at which the member search engine is located searched by the local search server is definitely not a local search server. In this way, without determination, the local search server can send the second search request to the search server at which the member search engine is located.

Step 105: The local search server receives a search result that is returned by the search server at which the member search engine is located according to the second search request.

In this embodiment, after the search server at which the member search engine is located sends the second search request sent by the local search server to the member search engine to accomplish search, a search result is sent to the local search server.

Step 106: The local search server sends the search result to the client.

After receiving the search result sent by the search server at which the member search engine is located, the local search server sends the search result to the client.

In this embodiment, the local search server saves its own meta index and meta indexes of other search servers, so that the local search server can determine the member search engine through the meta indexes, so as to determine the search server at which the member search engine is located. Through each of the other search servers, the local search server can select a member search engine managed by the each search server for search, so that member search engines managed by the search servers can be uniformly controlled, computation burden of a local search server can also be reduced, and accuracy of mobile search is increased.

The mobile search method according to the embodiment of the present invention is described in detail.

A registration process of a member search engine and a process of establishing a meta index between the member search engine and a search server are described.

In order to implement mobile search, in this embodiment of the present invention, a search server not only needs to maintain parameter information of a locally registered member search engine, but also needs to synchronize meta indexes of member search engines managed by the search server with other search servers.

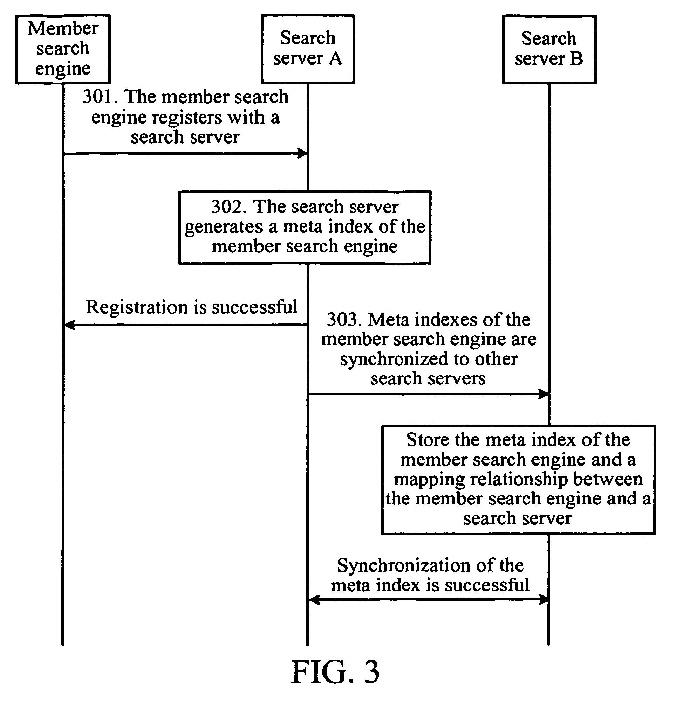

Referring to FIG. 3, a registration process of a member search engine and a process of establishing a meta index between the member search engine and a search server according to an embodiment of the present invention include the following steps:

Step 301: The member search engine registers with a local search server.

Registration content includes a member search engine identifier, a search type, and a search request Uniform Resource Locator (URL). The search engine identifier can be used to uniquely identify the member search engine. The search type can be a content category of a search engine, and can also be a geographical location category, and the type can also be formed of one or more labels. The category or label can be defined by the member search engine itself, or defined by the local search server, and then the member search engine selects the category or label to which it belongs during registration. Furthermore, one member search engine can belong to multiple search types. The search request URL can register in terms of an opensearch specification. Parameters carried in a URL can be defined in terms of URL standardized parameters and URL personalized parameters that are defined in the opensearch specification.

An example that the member search engine registers with the local search server is illustrated by taking an example as follows:

```
 <?xml version=" 1.0" encoding="UTF-8"?>
 <OpenSearchDescription xmlns="http://a9.com/-/spec/opensearch/1.1/">
 <ShortName>Hotel Search</ShortName>
 <Description>Use Example.com to search the Hotel web site.</Description>
   <Tags> Hotel web</Tags>
   <Contact>admin@example.com</Contact>
   <Url type="application/rss+xml"
   template="http://example.com/?q={searchTerms}&pw={startPage?}&format
   =rss"/>
  </OpenSearchDescription>
```

in which, "Hotel Search" denotes a search engine identifier; "Hotel web" denotes a search engine category; and "http://example.com/?q={searchTerms}&pw={startPage?}&format=rss" denotes a search request URL.

Step 302: The local search server generates a meta index of the member search engine.

A meta index is an index of the metasearch engine, that is, the search server. For the member search engine, and the metasearch engine selects and controls the member search engine by using the meta index of the member search engine maintained locally.

The meta index is generalization and description of information of search capability of a search server for the member search engine. The meta index can be saved in a meta index database, and a meta index database in a local search server stores meta indexes of a local search server and other search servers.

Various structures and establishment processes of a meta index may exist. In the embodiments according to the present invention, the meta index can adopt a table structure, and a weight value of a keyword for each engine is given in the meta index. Table 1 is a schematic structural view of the meta index.

**Table 1 Structure of Meta Index**

| Engine Identifier | Member Search Engine 1 | Member Search Engine 2 | ...... | Member Search Engine N |
|---|---|---|---|---|
| Keyword 1 | 0.02 | 0.10 | ..... | 0.77 |
| Keyword 2 | 0.01 | 0.03 | ..... | 0.90 |
| ....... | ..... | ..... | ..... | ..... |
| Keyword n | 0.55 | 0.11 | ..... | 0.28 |

It can be seen from Table 1 that the meta index in the embodiment of the present invention includes three types of content: a keyword, an engine, and a weight value. The keyword denotes a search keyword adopted during search, and the weight value denotes association relationship between a certain keyword and a certain member search engine.

The meta index as described in Table 1 is a meta index of a certain search server, and the local search server stores its own meta index and meta indexes of all other search servers. It can be understood that each search server corresponds to one meta index that is shown in Table 1, and specific content of the meta index is not illustrated any more here.

For ease of understanding, a generation process of a meta index is described.

The local search server can generate a meta index according to preset data or generate a meta index according to a demand of a user. For example, currently, three member search engines exist, which are a news search engine, a weather search engine, and a food search engine. When the local search engine generates a meta index, a keyword database is read, and the keyword database includes a search keyword. If a first read keyword is "Quanjude", the local search server establishes a meta index shown in the following table.

**Table 2**

| Engine Identifier | News Search Engine | Weather Search Engine | Food Search Engine |
|---|---|---|---|
| Quanjude | x = 0.09 | y = 0.01 | z = 0.90 |

In Table 2, x, y, and z are weight values between the keyword "Quanjude" and each member search engine, which represent a matching degree between the keyword and the member search engine. An amount of the weight value can usually be determined according to empirical values, or set manually, or calculated according to feedback of search results. For example, a matching degree between the "Quanjude" and the "food search engine" should be higher than the matching degrees between the "Quanjude" and other member search engines, and a specific value can be calculated as follows:

Different member search engines correspond to one specified database, and a data item in the database is related to specific search executed by the member search engine. For example, for the food search engine, a data item in the database corresponding to the food search engine is information related to food.

When the local search server reads a certain keyword, for example, "Quanjude", all member search engines are required to search by using the keyword, and a search result is reported to the local search server. The local search server records search results sent by different member search engines, summarizes the results, calculates a total number of the search results, and sets a weight value of the member search engine in terms of a ratio of the number of the search results sent by different member search engines in the total number of the search results. For example, "Quanjude" related search results sent by all member search engines are 100 in total. If the news search engine sends 9 search results, the weather search engine sends 1 search result, and the food search engine sends 90 search results, the local search server sets a weight value of "Quanjude" for the news search engine to 0.09, a weight value of "Quanjude" for the weather search engine to 0.01, and a weight value of "Quanjude" for the food search engine to 0.90.

It should be noted that, the weight value calculation mode described in the foregoing is only one example. In practical applications, likewise, the weight values of different keywords for different member search engines can further be calculated in other similar modes, which is not limited here.

Step 303: The local search server initiates a process of synchronizing search capability of member search engines to other search servers, that is, a process of meta index synchronization of local search servers.

The mobile search system in the embodiment of the present invention can adopt two structures: a central directory server topology structure and a semi-decentralized structured peer to peer (P2P) topology structure.

A specific process of meta index synchronization is illustrated in detail when the central directory server topology structure and the semi-decentralized structured P2P topology structure are adopted.

### 1. Central Directory Server Topology Structure

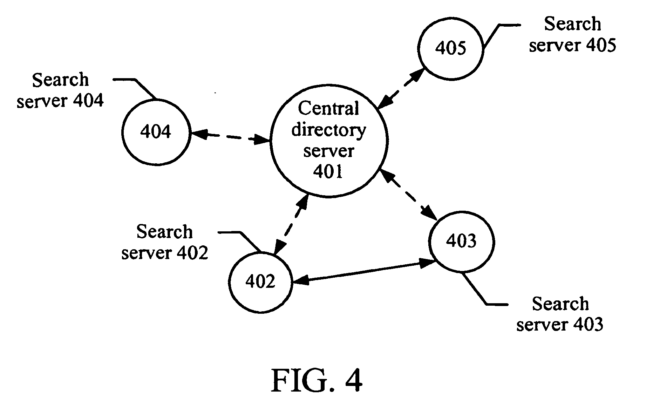

Referring to FIG. 4, in this embodiment, the central directory server topology structure is shown in FIG. 4. A central directory server 401 stores an address of each search server (a search server 402 to a search server 405 shown in FIG. 4). When a certain search server 402 in a network searches for an address of another search server 403, the search server 402 first sends a request to the central directory server 401, the central directory server 401 searches a server directory table, then the retrieved information of the URL address of the search server 403 is sent to the search server 402, and the search server 402 can directly send a message to the search server 403 according to the information.

In the central directory server topology structure, the specific process of meta index synchronization includes the following steps:

Step (1): A local search server obtains identifiers and addresses of other search servers which are to send an index synchronization message from the central directory server. Any one search server can serve as the central directory server, and an independent server can also serve as the central directory server. The central directory server saves a mapping table of an ID and a physical address of each search server for a search server to search physical addresses of other search servers. Each search server can save one buffer address table internally, and save mapping relationships between IDs and addresses of other visited search servers.

Step (2): The local search server sends a meta index synchronization request message of a member search engine to other search servers by using the identifiers and/or addresses of the other search servers, so as to request to synchronize meta indexes of local search servers.

Synchronization time intervals can be set in the local search server to trigger sending of the meta index synchronization message; or one event triggering mechanism (for example, addition or modification of a meta index of a member search engine) can be set in the local search server to trigger the sending of the meta index synchronization message.

Parameters carried in the meta index synchronization request message include: an operation identifier of meta index alteration (for example, it is specified to require update of a meta index) of a member search engine, content of meta index alteration, an identifier of a member search engine, and an identifier of a search server at which the member search engine is located. The meta index synchronization request message can further include: a category and a site of registration of a member search engine.

In this embodiment, the meta index synchronization request message can be specifically as follows:

```
  <?xml version-"1.0" encoding="utf-8"?>
  <SOAP:Envelope xmlns:xsi="http://www.w3.org/2001/XMLSchema-instance"
  xmlns:xsd="http://www.w3.org/2001/XMLSchema"
  xmlns:soap="http://schemas.xmlsoap.org/soap/envelope/">
  <SOAP:head>
  </SOAP:head>
  <SOAP:body>
  <tag>
  <from_server_URL>"www.mobileServerA.com"</from_server_URL>
  <to_server_URL>"www.mobileServerB.com"</to_server_URL>
  <msg_type>METAINDEX_SYNCHRONIZATION</msg_type>
  </tag>
  <content>
  <engine_ID>IDofal</engine_ID>
  <server_ID>IDofServerA</server_ID>
  < metaindex action type>"UPDATE"</metaindex_action_type>
  <data>
  <mataIndex>
  <action>weight value of keyword1=0.11</action>
  </mataIndex>
  <parameter>
  </parameter>
  </data>
  </content>
  </SOAP:body>
```

Specific content included in the foregoing information is explained and illustrated as follows:
<from_server_URL>"www.mobileServerA.com"</from_server_URL > denotes that the request message is sent by a server A.
<to_server_URL>"www.mobileServerB.com"</to_server_URL> denotes that a destination of the request message is a server B.
<msg_type>METAINDEX_SYNCHRONIIZATION</msg_type> denotes that the request message is a meta index synchronization request.
<engine_ID>IDofal</engine_ID> denotes that an object of the request message is an a1 member search engine.
<server_ID>IDofServerA</ server _ID> denotes that the object of the request message is the server A.
< metaindex_action_type>"UPDATE"</ metaindex_action_type> denotes that an operation to be performed in the synchronization request message at this time is "update". Content denoted by these three rows of content together is that "an operation to be performed in the synchronization request at this time is update of the a1 member search engine in the server A".
<action>weight value of keyword1=0.11</action> denotes that a specific operation to be performed in the request message is that a weight value of a keyword 1 corresponding to the a1 member search engine in a meta index of the server A is modified into 0.11.

Step (3): Other search servers that receive the meta index synchronization request message parse the meta index synchronization request message, so as to obtain the operation identifier of the meta index alteration of the member search engine, the content of meta index alteration, the identifier of the member search engine, and the identifier of the search server at which the member search engine is located.

Step (4): The other search servers store the updated meta index to a corresponding location of its own meta index database according to the search server at which the member search engine is located.

Step (5): The other search servers can also further store a mapping relationship between the updated member search engine and a meta search server at which the updated member search engine is located.

The mapping relationship between the member search engine and a local search server at which the member search engine is located stored by the other search servers can be a one-to-one mapping relationship between an identifier of the member search engine and an identifier and/or address of the local search server at which the member search engine is located. The mapping relationship can be stored in the form of a mapping table. Here, the illustration is provided by taking update of a certain value in a meta index as an example. Of course, a meta index of a local search server can also be updated as a whole, that is, an entire meta index is updated simultaneously.

### 2. Semi-Decentralized Structured P2P Topology Structure

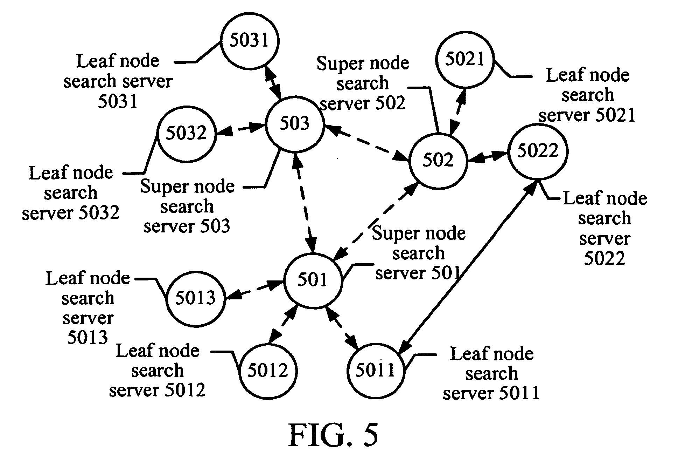

Referring to FIG. 5, in this embodiment, the semi-decentralized structured P2P topology structure is shown in FIG. 5. The semi-decentralized structured topology selects a node with higher performance as a super node search server (for example, 501, 502, and 503 in FIG. 5). Each super node search server in a system stores information of leaf node search servers in the system (for example, the super node search server 501 stores information of leaf nodes 5011, 5012, and 5013 in the system, the super node search server 502 stores information of leaf nodes 5021 and 5022 in the system, and the super node search server 503 stores information of leaf nodes 5031 and 5032 in the system). A request message is only forwarded among super node search servers 501, 502, and 503, and then the super node search server 501, 502 or 503 forwards the request message to its own leaf node search servers.

The semi-decentralized structure is a layered structure. One high-speed forwarding layer is constituted among the super node search servers 501, 502, and 503. The super node search server 501 and the leaf node search servers 5011, 5012, and 5013 under the charge of the super node search server 501 constitute several layers, the super node search server 502 and the leaf node search servers 5021 and 5022 under the charge of the super node search server 502 constitute several layers, and the super node search server 503 and the leaf node search servers 5031 and 5032 under the charge of the super node search server 503 constitute several layers. Some search servers are selected to serve as super node search servers (which is assumed to be the super node search server 501), and under the super node search server 501, several leaf node search servers 5011, 5012, and 5013 can be organized. The super node search server 501 saves a mapping relationship table between addresses of all leaf node search servers 5011, 5012, and 5013 under the super node search server 501 and an ID of the super node search server 501.

In the semi-decentralized structured topology structure, the specific process of meta index synchronization includes the following two cases.

Case A. When a local search server serves as a leaf node search server, a process of meta index synchronization is as follows:

Step (1): The local search server sends a meta index synchronization request message of a member search engine to a super node search server at which the local search server is located.

In this embodiment, synchronization time intervals can be set in a local search server to trigger sending of the meta index synchronization request message, or one event triggering mechanism (for example, addition or modification of a meta index of a member search engine) can also be set in a local search server to trigger the sending of the meta index synchronization request message.

Parameters carried in the meta index synchronization request message can include: an operation identifier of meta index alteration of a member search engine, content of meta index alteration, an identifier of a member search engine, and an identifier of a search server at which the member search engine is located. The meta index synchronization request message can further include a category and a site of registration of a member search engine.

For example, the message content is as follows:

```
  <?xml version="1.0" encoding="utf-8"?>
  <SOAP:Envelope xmlns:xsi="http://www.w3.org/2001/XMLSchema-instance"
  xmlns:xsd"http://www.w3.org/2001/XMLSchema"
  xmlnsaoap="http://schemas.xmlsoap.org/soap/envelope/">
  <SOAP:head>
  </SOAP:head>
  <SOAP:body>
 <tag>
 <from-server-URL>"www.mobileServer5011.com"</from-server-URL>
 <to_server_URL>"www.mobileServer501.com"</to_server_URL>
 <msg_type>METAINDEX_SYNCHRONIIZATION</msg_type>
 </tag>
 <content>
 <engine_ID>IDofal</engine_ID>
 <server_ID>IDofServer5011</server_ID>
 < metaindex_action_type>"UPDATE"</metaindex_action_type>
 <data>
 <mataIndex>
 <action>weight value of keyword1=0.11</action>
 </mataIndex>
  <parameter>
  </parameter>
  </data>
 </content>
 </SOAP:body>
```

Specific content included in the foregoing information is explained and illustrated as follows:
<from_server_URL>www.mobileServer5011.com"</from_server_URL> denotes that the request message is sent by the local search server 5011. As shown in FIG. 5, the local search server 5011 is a leaf node search server.
<to_server_URL>"www.mobileServer501.com"</to_server_URL> denotes that a destination of the request message is the super node search server 501. As shown in FIG. 5, the super node search server 501 is a super node search server at which the local search server 5011 is located.
<msg_type>METAINDEX_SYNCHRONIIZATION</msg_type> denotes that the request message is a meta index synchronization request.
<engine_ID>IDofal</engine_ID> denotes that an object of the request message is an a1 member search engine.
<server_ID>IDofServer5011</server_ID> denotes that an object of the request message is the local search server 5011.
<metaindex_action_type>"UPDATE"</metaindex_action_type> denotes that an operation to be performed in the synchronization request message at this time is "update". Content denoted by these three rows of content together is that "an operation to be performed in the synchronization request at this time is update of a meta index of the a1 member search engine in the local search server 5011".
<action>weight value of keyword1=0.11</action> denotes that a specific operation to be performed in the request message is: a weight value of a keyword 1 corresponding to the a1 member search engine in a meta index of the local search server 5011 is modified into 0.11.

Step (2): The super node search server at which the local search server is located forwards the meta index synchronization request message of the member search engine to all other leaf node search servers under the super node search server.

In this embodiment, after receiving the meta index synchronization request message sent by the local search server 5011, the super node search server 501 forwards the meta index synchronization request message to all other leaf node search servers (that is, 5012 and 5013) under the super node search server 501. Content of the forwarded meta index synchronization request message is similar to that of the meta index synchronization request message described in the foregoing example, and the only difference is as follows.

```
    <from_server_URL>"www.mobileServer501.com"</from_server_URL>
    <to_server_URL>"www.mobileServer5012.com"</to_server_URL>
    <to_server_URL>"www.mobileServer5013.com"</to_server_URL>
```

It denotes that the meta index synchronization request message is sent from the super node search server 501 to the leaf node search servers 5012 and 5013.

Step (3): The super node search server at which the local search server is located forwards the meta index synchronization request message of the member search engine to all other search servers as super nodes.

In this embodiment, after receiving the meta index synchronization request message sent by the local search server 5011, the super node search server 501 can further forward the meta index synchronization request message to other super node search servers (502 and 503 in FIG. 5). Content of the forwarded meta index synchronization request message is similar to that of the meta index synchronization request message described in the foregoing example, and is shown as follows:

```
    <from_server_URL,>"www.mobileServer501.com"</from_server_URL>
    <to_server_URL>"www.mobileServer502.com"</to_server_URL>
    <to_server_URL>"www.mobileServer503.com"</to_server_URL>
```

It denotes that the meta index synchronization request message is sent from the super node search server 501 to the super node search servers 502 and 503.

Step (4):Super node search servers that receive the meta index synchronization request message forward the meta index synchronization request message to their respective leaf node search servers.

After receiving the meta index synchronization request message, the super node search servers 502 and 503 forward the message to their respective leaf node search servers respectively to notify each leaf node search server to synchronize meta indexes.

Step (5): A leaf node search server parses the meta index synchronization request message of the member search engine, and stores the meta index of the member search engine to a corresponding location of a meta index database according to the search server at which the member search engine is located.

After receiving the meta index synchronization request message, the leaf node search servers 5021, 5022, 5031, and 5032 perform synchronization according to the meta index synchronization request message.

Step (6): The leaf node search servers and the super node search servers can further store a mapping relationship between the member search engine a1 and the local search server 5011 at which the member search engine is located.

The mapping relationship between the member search engine and a local search server at which the member search engine is located stored by the leaf search servers can be a one-to-one mapping relationship between an identifier of the member search engine and an identifier and/or address of the local search server at which the member search engine is located. The mapping relationship can be stored in the form of a mapping table.

Case B. When a local search server serves as a super node search server, a process of meta index synchronization includes the following steps:

Step (1): The local search server sends a meta index synchronization request message of a member search engine to leaf node search server that belong to the local search server.

In this embodiment, synchronization time intervals can be set in a local search server to trigger sending of the meta index synchronization request message, or an event triggering mechanism (for example, addition or modification of a meta index of a member search engine) can also be set in a local search server to trigger the sending of the meta index synchronization request message.

Parameters carried in the meta index synchronization request message can include: an operation identifier of meta index alteration of a member search engine, content of meta index alteration, an identifier of a member search engine, and an identifier of a search server at which the member search engine is located. The meta index synchronization request message can further include a category and a site of registration of a member search engine.

For example, the message content is as follows:

```
       <?xml version="1.0" encoding="utf-8"?>
      <SOAP:Envelope xmlns:xsi="http://www.w3.org/2001/XMLSchema-instance"
 xmlns:xsd="http://www.w3.org/2001/XMLSchema"
 xmlns:soap="http://schemas.xmlsoap.org/soaplenvelope/">
       <SOAP:head>
       </SOAP:head>
       <SOAP:body>
       <tag>
       <from_server_URL>"www.mobileServer501.com"</from_server_URL>
       <to_server_URL>"www.mobileServer5011.com"<to_server_URL>
       <to_server_URL>"www.mobileServer5012.com"</to_server_URL>
       <to_server_URL>"www.mobileServer5013.com"</to_server_URL>
       <msg_type>METAINDEX_SYNCHRONIIZATION</msg_type>
       </tag>
       <content>
       <engine_ID>IDofal</engine_ID>
       <server_ID>IDofServer501</server_ID>
       <metaindex_action_type>"UPDATE"</metaindex_action_type>
       <data>
      <mataIndex>
       <action>weight value of keyword 1=0.11</action>
      </mataIndex>
      <parameter>
      </parameter>
      </data>
      </content>
      </SOAP:body>
```

Specific content included in the foregoing information is explained and illustrated as follows:
<from_server_URL>"www.mobileServer501.com"</from_server_URL> denotes that the request message is sent by the super node search server 501. As shown in FIG. 5, in this embodiment, the super node search server 501 is a local search server.
<to_server_URL>"www.mobileServer5011.com"/to_server_URL>
<to_server_URL>"www.mobileServer5012.com"</to_server_URL>
<to_server_URL>"www.mobileServer5013.com"</to_server_URL>

It denotes that the destinations of the request message are leaf node search servers 5011, 5012, and 5013. As shown in FIG. 5, the super node search server 501 (that is, the local search server) has three leaf node search servers, which are 5011, 5012, and 5013 respectively.

<msg_type>METAINDEX_SYNCHRONIIZATION</msg_type> denotes that the request message is a meta index synchronization request.

<engine_ID>IDofal</engine_ID> denotes that an object of the request message is an a1 member search engine.

<server_ID>IDofServer501</server_ID> denotes that an object of the request message is the local search server 501.

<metaindex_action_type>"UPDATE"</metaindex_action_type> denotes that an operation to be performed in the synchronization request message at this time is "update". Content denoted by these three rows of content together is that "an operation to be performed in the synchronization request at this time is update of a meta index of the a1 member search engine in the super node search server 501 (that is, the local search server)".

<action>weight value of keyword 1=0.11 </action> denotes that a specific operation to be performed in the request message is that a weight value of a keyword 1 corresponding to the a1 member search engine in a meta index of the super node search server 501 (that is, the local search server) is modified into 0.11.

Step (2): The local search server forwards the meta index synchronization request message of the member search engine to all other search servers as serving super nodes.

In this embodiment, the super node search server 501 (that is, the local search server) can further forward the meta index synchronization request message to other super node search servers (such as 502 and 503 in FIG. 5). Content of the forwarded meta index synchronization request message is similar to that of the meta index synchronization request message described in the foregoing example, and the only difference is as follows.

<from_server_URL>"www.mobileServer501.com"</from_server_URL >

<to_server_URL>"wvww.mobileServer502.com"</to_server_URL>

<to_server_URL>"www.mobileServer503.com"</to_server_URL>

It denotes that the meta index synchronization request message is sent from the super node search server 501 (that is, the local search server) to the super node search servers 502 and 503.

Step (3): Super node search servers that receive the meta index synchronization request message forward the meta index synchronization request message to respective leaf node search servers.

After receiving the meta index synchronization request message, the super node search servers 502 and 503 forward the message to their respective leaf node search servers respectively to notify each leaf node search server to synchronize meta indexes.

Step (4): A leaf node search server parses the meta index synchronization request message of the member search engine, and stores the meta index of the member search engine to a corresponding location of a meta index database according to the search server at which the member search engine is located.

After receiving the meta index synchronization request message, the leaf node search servers 5011, 5012, 5021, 5022, 5031, and 5032 perform synchronization according to the meta index synchronization request message.

Step (5): The leaf node search servers and the super node search servers can further store a mapping relationship between the member search engine a1 and the local search server 501 at which the member search engine is located.

The mapping relationship between the member search engine and a local search server at which the member search engine is located stored by the leaf search servers can be a one-to-one mapping relationship between an identifier of the member search engine and an identifier and/or address of the local search server at which the member search engine is located. The mapping relationship can be stored in the form of a mapping table.

In this embodiment, the synchronization of meta indexes among all search servers is to update the content of meta index alteration. It should be noted that, the meta indexes can also be synchronized by directly updating meta indexes of the entire search server.

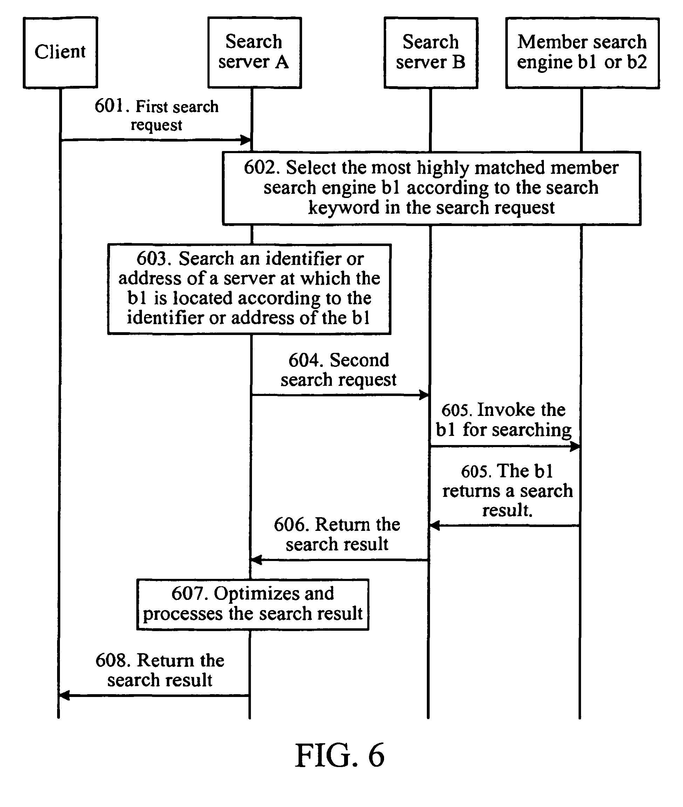

After the meta indexes are synchronized among all search servers, mobile search can be further performed. FIG. 6 is a flow chart of mobile search according to an embodiment of the present invention. Referring to FIG. 6, a mobile search process includes the following steps:

Step 601: A client sends a first search request to a local search server A.

In this embodiment, when in need of search, a user sends a first search request including a search keyword to the local search server A through the client. For ease of understanding, in this embodiment, "Quanjude" is taken as an example for illustration, that is, the search keyword included in the first search request sent to local search server A by the client is "Quanjude".

Step 602: The local search server A acquires the most highly matched member search engine b1 by selecting according to the keyword in the first search request.

Because the local search server A stores a meta index of a member search engine locally registered and meta indexes of member search engines of other search servers, and keeps in synchronization with meta indexes in other search servers, the most highly matched member search engine acquired by selecting can be the local search server A or a member search engine in other search servers. In this embodiment, an example that the most highly matched member search engine b1 acquired by selecting is a member search engine in a search server B is taken for illustration.

Furthermore, the number of the most highly matched member search engines acquired by selecting can also be one or more. In this embodiment, an example of one most highly matched member search engine acquired by selecting is taken for illustration in this embodiment.

The specific process is as follows:

The local search server A parses the first search request, and reads related information from a "keyword" field of the first search request, so as to acquire the search keyword "Quanjude".

The local search server A acquires the most highly matched member search engine b1 from a meta index stored in the local search server A according to the search keyword.

In this embodiment, the local search server A can store the meta indexes shown in Table 2. After reading the keyword "Quanjude", the local search server A can determine a member search engine most highly matched with "Quanjude" in terms of the meta index, that is, a member search engine with the highest weight value, and can determine that the "food search engine" is the most highly matched member search engine. In this embodiment, it is assumed that the "food search engine" is located on the search server B, and the "food search engine" is the member search engine b1.

Step 603: The local search server A searches a mapping table of the member search engine b1 and a search server at which the member search engine b1 is located by using an identifier of the member search engine b1, so as to acquire an identifier or address of the search server B at which the member search engine b1 is located.

The mapping table of the member search engine b1 and the search server at which the member search engine b1 is located stores a mapping relationship between a member search engine and a search server at which the member search engine is located, for example, the identifier of the member search engine b1 corresponds to the identifier and/or address of the search server B.

Step 604: The local search server A sends a second search request message to the target search server B by using the identifier and/or address of the search server B.

The search server B means a search server at which the member search engine b1 is located acquired by selecting.

Before the second search request message is sent to the target search server B, the following steps are further included.

It is determined whether the search server at which the member search engine b1 is located is the local search server A.

If yes, the second search request is forwarded to the member search engine of the local search server A.

If no, the second search request is sent to the search server B at which the member search engine b1 is located.

In this embodiment, the search server at which the member search engine b1 is located is the local search server B instead of the local search server A.

Parameters carried by the second search request message can include: the identifier of the local search server A that sends the request, the identifier of the search server B, the identifier of the member search engine b1, a search condition attribute of the search request, and keyword and category information of the search request.

For example, the message content is as follows:

```
       <?xml version="1.0" encoding="utf-8"?>
       <SOAP:Envelope xmlns:xsi="http://www.w3.org/2001/XMLSchema-instance"
  xmlns:xsd="http://www.w3.org/2001/XMLSchema"
  xmlns:soap="http://schemas.xmlsoap.org/soap/envelope/">
       <SOAP:head>
       </SOAP:head>
       <SOAP:body>
       <tag>
       <from_server_URL>"www.mobileServerA.com"</from_server_URL>
       <to_server_URL>"www.mobiteServerB.com"</to_server_URL>
       <msg_type>SEARCH_REQUEST</msg_type>
       </tag>
       <content>
       <request_server_ID>IDofServerA</server_ID>
       <result_server_ID>IDofs erverB</server_ID>
       <engine_ID>IDofb1</engine_ID>
       <keyword>"Quanjude"</keyword>
       </content>
 </SOAP: body>
```

Specific content included in the foregoing information is explained and illustrated as follows:
<from_server_URL>"www,mobileserverA.com"</from_server_URL> denotes that the request message is sent by the local search server A.
<to_server_URL>"www.mobileServerB.com"</to_server_URL>denotes that a destination of the request message is the search server B.
<msg_type> SEARCH_REQUEST</msg_type> denotes that the request message is the search request message.
<request_server_ID>IDofServerA</server_ID> denotes that the server that initiates the request message is the local search server A.
<result_server_ID>IDofServerB</server_ID> denotes that the search server B receives the request message.
<engine_ID>IDofb1</engine_ID> denotes that the member search engine b1 performs search.
<keyword>"Quanjude"</keyword> denotes that the search keyword to be searched is "Quanjude".

Step 605: The search server B parses the second search request message, acquires the search keyword and the identifier of the member search engine b1, forwards the second search request to the member search engine b1 for search, the member search engine b1 acquires a search result, and sends the search result to the local search server A through the search server B.

In this embodiment, after receiving the second search request sent by the search server B, the member search engine b1 parses the second search request. If a search keyword of this search read from the "keyword" field in the second search request is "Quanjude", the search can be performed according to the search keyword, and a search result is acquired. The specific search result can be information such as pictures, news, links, videos or texts related to "Quanjude".

Step 606: The local search server A receives a search result message returned by the search server B.

Parameters carried by the message can include: the identifier of the local search server A that sends the request, the identifier of the search server B, the identifier of the member search engine b1 that sends the search result, the search condition attribute of the search request, keyword and/or category information of the search request, and search result content.

For example, the message content is as follows:

```
      <?xml version="1.0" encoding="utf-8"?>
      <SOAP:Envelope xmlns:xsi="http://www.w3.org/2001/XMLSchema-instance"
 xmlns:xsd="http://www.w3.org/2001/XMLSchema"
 xmlns:soap="http://schemas.xmlsoap.org/soap/envelope/">
      <SOAP:head>
      </SOAP:head>
      <SOAP:body>
      <tag>
      <from_server_URL>"www.mobileServerB.com"</from_server_URL>
      <to_server_URL>"www.mobileServerA.com"</to_server_URL>
      <msg_type>SEARCH_RESULT</msg_type>
      </tag>
      <content>
      <request_server_ID>IDofServerA</ server_ID>
      <result_server_ID>IDofServerB</ server _ID>
      <engine_ID>IDofb1</engine_ID>
       <keyword>"Quanjude"</keyword>
       <results>
       <link>www.quanjude.com</link>
       <fig>www.xxxxxx.com/cache/database/eat/chinese/quanjude.jpeg</fig>
       </results>
       </content>
       </SOAP:body>
```

Specific content included in the foregoing information is explained and illustrated as follows:
<from_server_URL>"www.mobileServerB.com"</from_server_URL> denotes that the message is sent by the search server B.
<to_server_URL>"www.mobileServerA.com"</to_server_URL>denotes that a destination of the message is the local search server A.
<msg_type> SEARCH_RESULT</msg_type> denotes that the message is the search result message.
<request_server_ID>IDofServerA</server_ID> denotes that a server that searches the request message is the local search server A.
<result_server_ID>IDofServerB</server_ID> denotes that the search server B receives a search message.
<engine_ID>IDofb1</engine_ID> denotes that the member search engine b1 performs search.
<keyword>"Quanjude"</keyword> denotes that the search keyword to be searched is "Quanjude".
<link>www.quanjude.com</link> denotes a hyperlink of the searched Quanjude website.
<fig>www.xxxxxx.com/cache/database/eat/chinese/quanjude.jpeg</fig> denotes a picture related to Quanjude searched from a certain website.

Step 607: The local search server A optimizes and processes the result.

This step is optional. The local search server A can further optimize and process the result in combination with the user's requirements. For example, the user requires search results in Chinese, so that the local search server A deletes results in other languages except the results in Chinese in the search results to keep the results in Chinese only.

Step 608: The results are returned to the client.

In this embodiment, after receiving the first search request sent by the client, the local search server A reads the search keyword from the first search request, searches the member search engine corresponding to the search keyword in the meta index stored locally, and then searches the search server at which the member search engine is located. If the found search server is not the local search server, the local search server sends the second search request to the found search server, and the search server at which the member search engine is located searches and sends the search result. Therefore, the local search server can select member search engines managed by each search server for search, so that the member search engines managed by all search servers can be uniformly controlled, computation burden of a server can also be reduced, and accuracy of mobile search is increased.

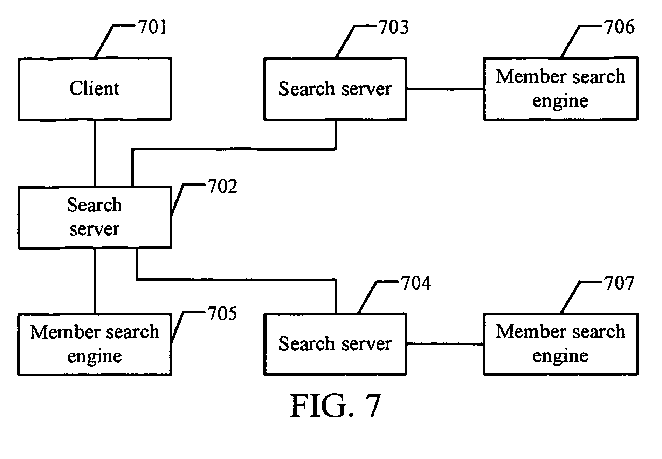

FIG. 7 is a structural view of a mobile search system according to an embodiment of the present invention.

Referring to FIG. 7, the mobile search system includes a client 701, search servers 702, 703, and 704, and member search engines 705, 706, and 707 managed by all search servers.

The search server 702 is configured to: receive a first search request sent by the client 701, acquire a member search engine by selecting from a meta index including meta indexes of a local search server and other search servers according to a search keyword, determine whether a search server at which the member search engine is located is a local search server, if not, send a second search request to the search server at which the member search engine acquired by selecting is located, receive a search result that is returned by the search server at which the member search engine is located according to the second search request, and return the search result to the client 701 according to a client identifier.

If the search server at which the member search engine is located is a local search server, the first search request is forwarded to the member search engine, a search result returned by the member search engine after search according to the first search request is received, and the search result is returned to the client 701.

The member search engines 705, 706, and 707 are configured to perform search according to the second search request received from the search server 702, and return a search result to the search server 702.

In the mobile search system in this embodiment, because the search server 702 stores meta indexes of its own and the search servers 705, 706, and 707, after receiving the first search request sent by the client 701, the search server 702 can search a member search engine most highly matched with the search keyword according to the search keyword carried in the request. If the member search engine is the member search engine 706, an identifier or address of the search server 703 at which the member search engine 706 is located is searched. The second search request is sent to the search server 703 according to the found identifier or address. The search server 703 invokes the member search engine 705 for search. The member search engine 705 performs search to acquire a search result. The search server 703 sends the search result to the search server 702, and then the search server 702 sends the search result to the client 701. Therefore, the search server 702 can select the member search engines managed by all search servers for search, so that the member search engines managed by all search servers can be uniformly controlled, computation burden of a server can also be reduced, and accuracy of mobile search is increased.

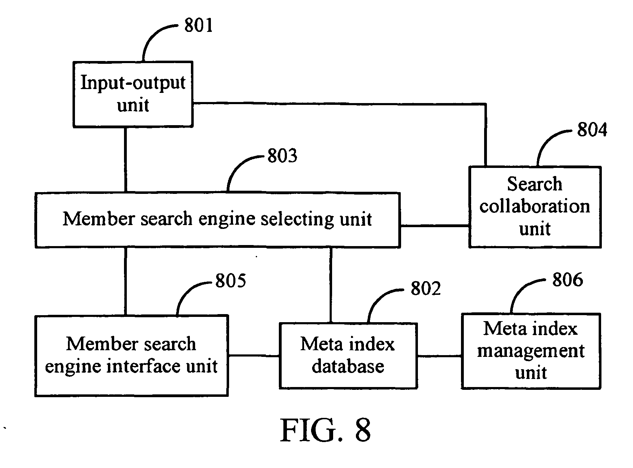

FIG. 8 is a schematic diagram of a search server according to an embodiment of the present invention. Referring to FIG. 8, the search server according to the embodiment of the present invention includes an input-output unit 801, a meta index database 802, a member search engine selecting unit 803, and a search collaboration unit 804.

The input-output unit 801 is configured to receive a first search request carrying a client identifier and a search keyword sent by a client and return the search result to the client.

The meta index database 802 is configured to store meta indexes of a local search server and other search servers.

The member search engine selecting unit 803 is configured to acquire a member search engine by selecting from a meta index stored in the meta index database 802 according to the first search request, determine whether a server at which the member search engine is located is a local search server, if not, control a search collaboration unit to send a second search request to the search server at which the member search engine acquired by selecting is located.

The specific manner is that: a specific selecting algorithm is adopted according to a search keyword, and a member search engine most highly matched with the search keyword is acquired by selecting from the meta index.

The search collaboration unit 804 is configured to send a search request to the search server at which the member search engine acquired by the member search engine selecting unit 803 by selecting is located.

The search request carries an identifier of the search server that sends the search request, an identifier of the member search engine acquired by selecting, and the search keyword.

The search server can further include a member search engine interface unit 805. The member search engine interface unit 805 is configured to send the search request to the member search engine or receive a search result returned by the member search engine.

The search server can further include a meta index management unit 806, which is configured to: receive a meta index synchronization request sent by other search servers, in which the request carries an operation identifier of meta index alteration of a member search engine, content of meta index alteration, an identifier of a member search engine, and an identifier of a search server at which the member search engine is located, and update meta indexes of other search servers in the meta index database according to the meta index synchronization request.

The operation identifier of the meta index alteration is an added or modified identifier. The meta index synchronization request further includes registration parameters such as a category and a site of the member search engine used for selecting.

The updating meta indexes of other search servers in the local search server according to the meta index synchronization request includes the following steps.

The meta index synchronization request is parsed to obtain the operation identifier of meta index alteration of the member search engine, the content of meta index alteration, the identifier of the member search engine, and the identifier of the search server at which the member search engine is located.

A updated meta index of the member search engine is stored to a specified location in the meta index database according to the identifier of the search server at which the member search engine is located, and a mapping relationship between the updated member search engine and the search server at which the updated member search engine is located is stored according to the identifier of the member search engine.

In this embodiment, because the meta index database 802 stores the meta indexes of the local search server and other search servers, after the input-output unit 801 receives the first search request sent by the client, the member search engine selecting unit 803 can search the member search engine most highly matched with the search keyword in the first search request, and send the second search request to the search server at which the member search engine is located. Therefore, the search server can select member search engines managed by all search servers for search, so that the member search engines managed by all search servers can be uniformly controlled, computation burden of a server can also be reduced, and accuracy of mobile search is increased.

Persons of ordinary skill in the art may understand that all or part of the steps of the method according to the embodiments of the present invention may be implemented by a program instructing relevant hardware. The program may be stored in a computer readable storage medium, which can be a Read-Only Memory (ROM)/Random Access Memory (RAM), a magnetic disk, and an optical disk.

A mobile search method and system, and a method for synchronizing search capability of a search server according to the present invention are illustrated in detail in the foregoing. Specific examples are used to set forth principles and implementation manners of the present invention, and the foregoing illustration of the embodiments is only used to help understanding of the technical solutions according to the present invention.

## Claims

1. A mobile search method, comprising:
receiving (101), by a local search server, a first search request sent by a client, wherein the first search request carries a search keyword;
acquiring a member search engine by selecting from a meta index stored locally according to the search keyword, wherein the meta index stored locally comprises a meta index of the local search server and meta indexes of other search servers, wherein the meta index comprises three types of content: a keyword, an engine and a weight value, and wherein the weight value denotes an association relationship between a keyword and a member search engine;
searching a search server at which the member search engine is located; and
when the search server at which the member search engine is located is not a local search server, sending a second search request to the search server at which the member search engine is located, wherein the second search request comprises the search keyword;
receiving (105) a search result that is returned by the search server at which the member search engine is located according to the second search request; and
sending (106) the search result to the client.

2. The mobile search method according to claim 1, wherein the acquiring the member search engine by selecting from the meta index stored locally according to the search keyword comprises:
selecting a member search engine most highly matched with the search keyword by selecting from the meta index stored locally.

3. The mobile search method according to claim 1, wherein the searching the search server at which the member search engine is located comprises:
searching (103) the search server at which the member search engine is located from a mapping relationship between a stored member search engine and the search server at which the member search engine is located.

4. The mobile search method according to claim 3, wherein the sending the second search request to the search server at which the member search engine is located comprises:
acquiring an identifier and/or address of the search server at which the member search engine is located, according to the mapping relationship; and
sending the second search request to the search server at which the member search engine is located, by using the identifier and/or address of the search server at which the member search engine is located.

5. The mobile search method according to claim 1, wherein after the sending the second search request to the search server at which the member search engine is located, the method comprises:
parsing, by the search server at which the member search engine is located, the second search request, so as to acquire the search keyword and an identifier and/or address of the member search engine; and
forwarding the second search request to the member search engine for search, by using the identifier and/or address of the member search engine.

6. The mobile search method according to claim 1, further comprising:
synchronizing, by the local search server, the meta index with the other search servers.

7. The mobile search method according to claim 6, wherein the synchronizing, by the local search server, the meta index with the other search servers comprises:
sending, by the local search server, a meta index synchronization request of the local search server to the other search servers; and
updating, by the other search servers, the stored meta index of the local search server according to the meta index synchronization request.

8. The mobile search method according to claim 7, wherein the sending the meta index synchronization request to the other search servers comprises:
acquiring, by the local search server, identifiers and/or addresses of the other search servers; and
sending, by the local search server, the meta index synchronization request to the other search servers by using the identifiers and/or addresses of the other search servers.

9. The mobile search method according to claim 7 or 8, wherein the updating, by the other search servers, the stored meta index of the local search server according to the meta index synchronization request comprises:
parsing the meta index synchronization request; and
storing the updated meta index of the local search server to a meta index database by using an identifier of the local search server.

10. The mobile search method according to claim 9, further comprising:
storing, by the local search server and the other search servers, a mapping relationship between a member search engine of the local search server and a local search server at which the member search engine is located.

11. The mobile search method according to claim 7, wherein the local search server is a super node search server,
the sending the meta index synchronization request of the local search server to the other search servers comprises:
sending, by the local search server, the meta index synchronization request to other super node search servers, and
the updating, by the other search servers, the stored meta index of the local search server according to the meta index synchronization request comprises:
parsing the meta index synchronization request, storing, by the other super node search servers, the updated meta index of the local search server to a meta index database, and synchronizing the updated meta index to the leaf node search server(s) of the other super node search servers.

12. The mobile search method according to claim 7, wherein the local search server is a leaf node search server,
the sending the meta index synchronization request of the local search server to the other search servers comprises:
sending, by the local search server, the meta index synchronization request to a super node search server at which the local search server is located, and
sending, by the super node search server at which the local search server is located, the meta index synchronization request to other super node search servers; and
the updating, by the other search servers, the stored meta index of the local search server according to the meta index synchronization request comprises:
parsing the meta index synchronization request, storing, by the other super node search servers, the updated meta index of the local search server to a meta index database, and synchronizing the updated meta index to the leaf node search server(s) of the other super node search servers.

13. A search server, comprising:
an input-output unit (801), configured to receive a first search request of a client, send the first search request to a member search engine selecting unit (803), and return a search result to the client;
a meta index database (802), configured to store a meta index of a local search server and meta indexes of other search servers, wherein the meta index comprises three types of content: a keyword, an engine and a weight value, and wherein the weight value denotes an association relationship between a keyword and a member search engine;
the member search engine selecting unit (803), configured to acquire a member search engine by selecting from a meta index stored in the meta index database according to the first search request, and determine whether a server at which the member search engine is located is a local search server, if not, control a search collaboration unit (804) to send a second search request to the search server at which the member search engine acquired by selecting is located; and
the search collaboration unit (804), configured to send the second search request to the search server at which the member search engine is located, and receive a search result returned by the search server at which the member search engine is located.

14. The search server according to claim 13, wherein the search server further comprises:
a meta index management unit (806), configured to receive a meta index synchronization request, and store updated meta indexes of other search servers in the meta index database according to the meta index synchronization request.

15. A mobile search system, comprising:
multiple search servers according to claim 13 or 14, each managing at least one member search engine.

## Patentansprüche

1. Mobilsuchverfahren, das Folgendes umfasst:
Empfangen (101) durch einen lokalen Such-Server einer durch einen Client gesendeten ersten Suchabfrage, wobei die erste Suchabfrage ein Such-Schlagwort führt;
Erfassen einer Elementsuchmaschine durch das Auswählen aus einem lokal gespeicherten Metaindex in Übereinstimmung mit dem Such-Schlagwort, wobei der lokal gespeicherte Metaindex einen Metaindex des lokalen Such-Servers und Metaindizes weiterer Such-Server umfasst, wobei der Metaindex drei Inhaltstypen umfasst: ein Schlagwort, eine Maschine und einen Gewichtswert, und wobei der Gewichtswert eine Zuordnungsbeziehung zwischen einem Schlagwort und einer Elementsuchmaschine bezeichnet;
Suchen eines Such-Servers, bei dem sich die Elementsuchmaschine befindet; und wenn der Such-Server, bei dem sich die Elementsuchmaschine befindet, kein lokaler Such-Server ist, Senden einer zweiten Suchabfrage an den Such-Server, bei dem sich die Elementsuchmaschine befindet, wobei die zweite Suchabfrage das Such-Schlagwort umfasst;
Empfangen (105) eines Suchergebnisses, das durch den Such-Server, bei dem sich die Elementsuchmaschine befindet, in Übereinstimmung mit der zweiten Suchanfrage zurückgeschickt wird; und
Senden (106) des Suchergebnisses an den Client.

2. Mobilsuchverfahren nach Anspruch 1, wobei das Erfassen der Elementsuchmaschine durch Auswählen aus dem lokal gespeicherten Metaindex in Übereinstimmung mit dem Such-Schlagwort Folgendes umfasst:
Auswählen einer Elementsuchmaschine, die am meisten mit dem Such-Schlagwort zusammenpasst, durch Auswählen aus dem lokal gespeicherten Metaindex.

3. Mobilsuchverfahren nach Anspruch 1, wobei das Suchen des Such-Servers, bei dem sich die Elementsuchmaschine befindet, Folgendes umfasst:
Suchen (103) des Such-Servers, bei dem sich die Elementsuchmaschine befindet, aus einer Abbildungsbeziehung zwischen einer gespeicherten Elementsuchmaschine und dem Such-Server, bei dem sich die Elementsuchmaschine befindet.

4. Mobilsuchverfahren nach Anspruch 3, wobei das Senden der zweiten Suchabfrage an den Such-Server, bei dem sich die Elementsuchmaschine befindet, Folgendes umfasst:
Erfassen eines Identifizierers und/oder einer Adresse des Such-Servers, bei dem sich die Elementsuchmaschine befindet, in Übereinstimmung mit der Abbildungsbeziehung; und
Senden der zweiten Suchabfrage an den Such-Server, bei dem sich die Elementsuchmaschine befindet, unter Verwendung des Identifizierers und/oder der Adresse des Such-Servers, bei dem sich die Elementsuchmaschine befindet.

5. Mobilsuchverfahren nach Anspruch 1, wobei nach dem Senden der zweiten Suchabfrage an den Such-Server, bei dem sich die Elementsuchmaschine befindet, das Verfahren Folgendes umfasst:
Parsen durch den Such-Server, bei dem sich die Elementsuchmaschine befindet, der zweiten Suchabfrage, um das Such-Schlagwort und einen Identifizierer und/oder eine Adresse der Elementsuchmaschine zu erfassen; und
Weiterleiten der zweiten Suchabfrage an die Elementsuchmaschine zur Suche unter Verwendung des Identifizierers und/oder der Adresse der Elementsuchmaschine.

6. Mobilsuchverfahren nach Anspruch 1, das ferner Folgendes umfasst:
Synchronisieren durch den lokalen Such-Server des Metaindex mit den weiteren Such-Servern.

7. Mobilsuchverfahren nach Anspruch 6, wobei das Synchronisieren durch den lokalen Such-Server des Metaindex mit den weiteren Such-Servern Folgendes umfasst:
Senden durch den lokalen Such-Server einer Metaindex-Synchronisationsanforderung des lokalen Such-Servers an die weiteren Such-Server; und
Aktualisieren durch die weiteren Such-Server des gespeicherten Metaindex des lokalen Such-Servers in Übereinstimmung mit der Metaindex-Synchronisationsanforderung.

8. Mobilsuchverfahren nach Anspruch 7, wobei das Senden der Metaindex-Synchronisationsanforderung an die weiteren Such-Server Folgendes umfasst:
Erfassen durch den lokalen Such-Server von Identifizierern und/oder Adressen der weiteren Such-Server; und
Senden durch den lokalen Such-Server v Metaindex-Synchronisationsanforderung an die weiteren Such-Server unter Verwendung der Identifizierer und/oder Adressen der weiteren Such-Server.

9. Mobilsuchverfahren nach Anspruch 7 oder 8, wobei das Aktualisieren durch die weiteren Such-Server des gespeicherten Metaindex des lokalen Such-Servers in Übereinstimmung mit der Metaindex-Synchronisationsanforderung Folgendes umfasst:
Parsen der Metaindex-Synchronisationsanforderung; und
Speichern des aktualisierten Metaindex des lokalen Such-Servers in einer Metaindex-Datenbank unter Verwendung eines Identifizierers des lokalen Such-Servers.

10. Mobilsuchverfahren nach Anspruch 9, das ferner Folgendes umfasst:
Speichern durch den lokalen Such-Server und die weiteren Such-Server einer Abbildungsbeziehung zwischen einer Elementsuchmaschine des lokalen Such-Servers und einem lokalen Such-Server, bei dem sich die Elementsuchmaschine befindet.

11. Mobilsuchverfahren nach Anspruch 7, wobei der lokale Such-Server ein Superknoten-Such-Server ist,
wobei das Senden der Metaindex-Synchronisationsanforderung des lokalen Such-Servers an die weiteren Such-Server Folgendes umfasst:
Senden durch den lokalen Such-Server der Metaindex-Synchronisationsanforderung an weitere Superknoten-Such-Server, und
wobei das Aktualisieren durch die weiteren Such-Server des gespeicherten Metaindex des lokalen Such-Servers in Übereinstimmung mit der Metaindex-Synchronisationsanforderung Folgendes umfasst:
Parsen der Metaindex-Synchronisationsanforderung, Speichern durch die weiteren Superknoten-Such-Server des aktualisierten Metaindex des lokalen Such-Servers in einer Metaindex-Datenbank und Synchronisieren des aktualisierten Metaindex mit dem (den) Blattknoten-Such-Server(n) der weiteren Superknoten-Such-Server.

12. Mobilsuchverfahren nach Anspruch 7, wobei der lokale Such-Server ein Blattknoten-Such-Server ist,
wobei das Senden der Metaindex-Synchronisationsanforderung des lokalen Such-Servers an die weiteren Such-Server Folgendes umfasst:
Senden durch den lokalen Such-Server der Metaindex-Synchronisationsanforderung an einen Superknoten-Such-Server, bei dem sich der lokale Such-Server befindet, und
Senden durch den Superknoten-Such-Server, bei dem sich der lokale Such-Server befindet, der Metaindex-Synchronisationsanforderung an weitere Superknoten-Such-Server; und
wobei das Aktualisieren durch die weiteren Such-Server des gespeicherten Metaindex des lokalen Such-Servers in Übereinstimmung mit der Metaindex-Synchronisationsanforderung Folgendes umfasst:
Parsen der Metaindex-Synchronisationsanforderung, Speichern durch die weiteren Superknoten-Such-Server des aktualisierten Metaindex des lokalen Such-Servers in einer Metaindex-Datenbank und Synchronisieren des aktualisierten Metaindex mit dem (den) Blattknoten-Such-Server(n) der weiteren Superknoten-Such-Server.

13. Such-Server, der Folgendes umfasst:
eine Eingabe-Ausgabe-Einheit (801), die konfiguriert ist, eine erste Suchabfrage eines Clients zu empfangen, die erste Suchabfrage an eine Elementsuchmaschinen-Auswahleinheit (803) zu senden und ein Suchergebnis an den Client zurückzuschicken;
eine Metaindex-Datenbank (802), die konfiguriert ist, einen Metaindex eines lokalen Such-Servers und Metaindizes weiterer Such-Server zu speichern, wobei der Metaindex drei Inhaltstypen umfasst: ein Schlagwort, eine Maschine und einen Gewichtswert, und wobei der Gewichtswert eine Zuordnungsbeziehung zwischen einem Schlagwort und einer Elementsuchmaschine bezeichnet;
die Elementsuchmaschinen-Auswahleinheit (803), die konfiguriert ist, eine Elementsuchmaschine durch das Auswählen aus einem Metaindex, der in der Metaindex-Datenbank gespeichert ist, in Übereinstimmung mit der ersten Suchabfrage zu erfassen und zu bestimmen, ob ein Server, bei dem sich die Elementsuchmaschine befindet, ein lokaler Such-Server ist, wenn nicht, eine Suchzusammenarbeitseinheit (804) zu steuern, eine zweite Suchabfrage an den Such-Server zu senden, bei dem sich die durch das Auswählen erfasste Elementsuchmaschine befindet; und
die Suchzusammenarbeitseinheit (804), die konfiguriert ist, die zweite Suchabfrage an den Such-Server, bei dem sich die Elementsuchmaschine befindet, zu senden und ein von dem Such-Server, bei dem sich die Elementsuchmaschine befindet, zurückgeschicktes Suchergebnis zu empfangen.

14. Such-Server nach Anspruch 13, wobei der Such-Server ferner Folgendes umfasst: eine Metaindex-Managementeinheit (806), die konfiguriert ist, eine Metaindex-Synchronisationsanforderung zu empfangen und aktualisierte Metaindizes weiterer Such-Server in der Metaindex-Datenbank in Übereinstimmung mit der Metaindex-Synchronisationsanforderung zu speichern.

15. Mobilsuchsystem, das Folgendes umfasst:
mehrere Such-Server nach Anspruch 13 oder 14, wobei jeder wenigstens eine Elementsuchmaschine managt.

## Revendications

1. Procédé de recherche de mobile, comprenant les étapes suivantes :
recevoir (101), par un serveur de recherche local, une première requête de recherche envoyée par un client, où la première requête de recherche achemine un mot clé de recherche ;
acquérir un moteur de recherche de membre en effectuant une sélection depuis un méta-index stocké localement suivant le mot clé de recherche, où le méta-index stocké localement comprend un méta-index du serveur de recherche local et des méta-index d'autres serveurs de recherche, où le méta-index comprend trois types de contenu : un mot clé, un moteur et une valeur de pondération, et où la valeur de pondération indique une relation d'association entre un mot clé et un moteur de recherche de membre ;
rechercher un serveur de recherche au niveau duquel le moteur de recherche de membre est situé ; et
lorsque le serveur de recherche au niveau duquel le moteur de recherche de membre est situé n'est pas un serveur de recherche local, envoyer une seconde requête de recherche au serveur de recherche au niveau duquel le moteur de recherche de membre est situé, où la seconde requête de recherche comprend le mot clé de recherche ;
recevoir (105) un résultat de recherche qui est retourné par le serveur de recherche au niveau duquel le moteur de recherche de membre est situé suivant la seconde requête de recherche ; et
envoyer (106) le résultat de recherche au client.

2. Procédé de recherche de mobile selon la revendication 1, dans lequel l'acquisition du moteur de recherche de membre en effectuant une sélection à partir du méta-index stocké localement suivant le mot clé de recherche comprend l'étape suivante :
sélectionner un moteur de recherche de membre correspondant le mieux au mot clé de recherche en effectuant une sélection à partir du méta-index stocké localement.

3. Procédé de recherche de mobile selon la revendication 1, dans lequel la recherche du serveur de recherche au niveau duquel le moteur de recherche de membre est situé comprend les étapes suivantes :
rechercher (103) le serveur de recherche au niveau duquel le moteur de recherche de membre est situé à partir d'une relation de mappage entre un moteur de recherche de membre stocké et le serveur de recherche au niveau duquel le moteur de recherche de membre est situé.

4. Procédé de recherche de mobile selon la revendication 3, dans lequel l'envoi de la seconde requête de recherche au serveur de recherche au niveau duquel le moteur de recherche de membre est situé comprend les étapes suivantes :
acquérir un identificateur et/ou une adresse du serveur de recherche au niveau duquel le moteur de recherche de membre est situé, suivant la relation de mappage ; et
envoyer la seconde requête de recherche au serveur de recherche au niveau duquel le moteur de recherche de membre est situé, en utilisant l'identificateur et/ou l'adresse du serveur de recherche au niveau duquel le moteur de recherche de membre est situé.

5. Procédé de recherche de mobile selon la revendication 1, dans lequel après l'envoi de la seconde requête de recherche au serveur de recherche au niveau duquel le moteur de recherche de membre est situé, le procédé comprend les étapes suivantes :
analyser, par le serveur de recherche au niveau duquel le moteur de recherche de membre est situé, la seconde requête de recherche, de manière à acquérir le mot clé de recherche et un identificateur et/ou une adresse du moteur de recherche de membre ; et
retransmettre la seconde requête de recherche au moteur de recherche de membre pour effectuer la recherche en utilisant l'identificateur et/ou l'adresse du moteur de recherche de membre.

6. Procédé de recherche de mobile selon la revendication 1, comprenant en outre l'étape suivante :
synchroniser, par le serveur de recherche local, le méta-index avec les autres serveurs de recherche.

7. Procédé de recherche de mobile selon la revendication 6, dans lequel la synchronisation, par le serveur de recherche local, du méta-index avec les autres serveurs de recherche comprend les étapes suivantes :
envoyer, par le serveur de recherche local, une requête de synchronisation de méta-index du serveur de recherche local aux autres serveurs de recherche ; et
mettre à jour, par les autres serveurs de recherche, le méta-index stocké du serveur de recherche local suivant la requête de synchronisation de méta-index.

8. Procédé de recherche de mobile selon la revendication 7, dans lequel l'envoi de la requête de synchronisation de méta-index aux autres serveurs de recherche comprend les étapes suivantes :
acquérir, par le serveur de recherche local, des identificateurs et/ou des adresses des autres serveurs de recherche ; et
envoyer, par le serveur de recherche local, la requête de synchronisation de méta-index aux autres serveurs de recherche en utilisant les identificateurs et/ou les adresses des autres serveurs de recherche.

9. Procédé de recherche de mobile selon la revendication 7 ou la revendication 8, dans lequel la mise à jour, par les autres serveurs de recherche, du méta-index stocké du serveur de recherche local suivant la requête de synchronisation de méta-index comprend les étapes suivantes :
analyser la requête de synchronisation de méta-index ; et
stocker le méta-index mis à jour du serveur de recherche local dans une base de données de méta-index en utilisant un identificateur du serveur de recherche local.

10. Procédé de recherche de mobile selon la revendication 9, comprenant en outre l'étape suivante :
stocker, par le serveur de recherche local et les autres serveurs de recherche, une relation de mappage entre un moteur de recherche de membre du serveur de recherche local et un serveur de recherche local au niveau duquel le moteur de recherche de membre est situé.

11. Procédé de recherche de mobile selon la revendication 7, dans lequel le serveur de recherche local est un super serveur de recherche de noeud,
l'envoi de la requête de synchronisation de méta-index du serveur de recherche local aux autres serveurs de recherche comprend l'étape suivante :
envoyer, par le serveur de recherche local, la requête de synchronisation de méta-index à d'autres super serveurs de recherche de noeud, et
la mise à jour, par les autres serveurs de recherche, du méta-index stocké du serveur de recherche local suivant la requête de synchronisation de méta-index comprend les étapes suivantes :
analyser la requête de synchronisation de méta-index, stocker, par les autres super serveurs de recherche de noeud, le méta-index mis à jour du serveur de recherche local au niveau d'une base de données de méta-index, et synchroniser le méta-index mis à jour avec le/les serveur(s) de recherche de noeud feuille des autres super serveurs de recherche de noeud.

12. Procédé de recherche de mobile selon la revendication 7, dans lequel le serveur de recherche local est un serveur de recherche de noeud feuille,
l'envoi de la requête de synchronisation de méta-index du serveur de recherche local aux autres serveurs de recherche comprend les étapes suivantes :
envoyer, par le serveur de recherche local, la requête de synchronisation de méta-index à un super serveur de recherche de noeud au niveau duquel le serveur de recherche local est situé, et
envoyer, par le super serveur de recherche de noeud au niveau duquel le serveur de recherche local est situé, la requête de synchronisation de méta-index aux autres super serveurs de recherche de noeud ; et
la mise à jour, par les autres serveurs de recherche, du méta-index stocké du serveur de recherche local suivant la requête de synchronisation de méta-index comprend les étapes suivantes :
analyser la requête de synchronisation de méta-index, stocker, par les autres super serveurs de recherche de noeud, le méta-index mis à jour du serveur de recherche local au niveau d'une base de données de méta-index, et synchroniser le méta-index mis à jour avec le/les serveur(s) de recherche de noeud feuille des autres super serveurs de recherche de noeud.

13. Serveur de recherche comprenant :
une unité d'entrée-sortie (801) configurée pour recevoir une première requête de recherche d'un client, envoyer la première requête de recherche à une unité de sélection de moteur de recherche de membre (803) et retourner un résultat de recherche au client ;
une base de données de méta-index (802), configurée pour stocker un méta-index d'un serveur de recherche local et des méta-index d'autres serveurs de recherche, où le méta-index comprend trois types de contenu : un mot clé, un moteur et une valeur de pondération, et où la valeur de pondération indique une relation d'association entre un mot clé et un moteur de recherche de membre ;
l'unité de sélection de moteur de recherche de membre (803), configurée pour acquérir un moteur de recherche de membre en effectuant une sélection à partir d'un méta-index stocké dans la base de données de méta-index suivant la première requête de recherche, et déterminer si un serveur au niveau duquel le moteur de recherche de membre est situé est un serveur de recherche local, et, si tel n'est pas le cas, contrôler une unité de collaboration de recherche (804) pour envoyer une seconde requête de recherche au serveur de recherche au niveau duquel le moteur de recherche de membre acquis par la sélection est situé ; et
l'unité de collaboration de recherche (804), configurée pour envoyer la seconde requête de recherche au serveur de recherche au niveau duquel le moteur de recherche de membre est situé, et recevoir un résultat de recherche retourné par le serveur de recherche au niveau duquel le moteur de recherche de membre est situé.

14. Serveur de recherche selon la revendication 13, dans lequel le serveur de recherche comprend en outre :
une unité de gestion de méta-index (806), configurée pour recevoir une requête de synchronisation de méta-index et stocker des méta-index mis à jour d'autres serveurs de recherche dans la base de données de méta-index suivant la requête de synchronisation de méta-index.

15. Système de recherche de mobile comprenant :
plusieurs serveurs de recherche selon la revendication 13 ou la revendication 14, chacun gérant au moins un moteur de recherche de membre.
